# EUROPÄISCHE PATENTSCHRIFT

(11) **EP 0 492 051 B1**
(45) Veröffentlichungstag und Bekanntmachung des Hinweises auf die Patenterteilung: **28.12.1994**
(21) Anmeldenummer: 91113459.1
(22) Anmeldetag: 10.08.1991
(51) Int. Cl.: H04B 7/26, H04Q 7/04

(54) **Funktelefonnetz mit ausserhalb des Versorgungsbereichs möglicher Kommunikation**
Radiotelephone network enabling communication outside the coverage zone
Réseau de radiotéléphone avec communication possible en dehors de la zone de couverture

(30) Priorität: 10.12.1990 DE 4039312
(43) Veröffentlichungstag der Anmeldung: 01.07.1992
(73) Patentinhaber: ROBERT BOSCH GMBH, 70442 Stuttgart (DE)
(72) Erfinder: Becker, Michael, Dipl.-Ing., W-1000 Berlin 39 (DE)

(56) Entgegenhaltungen:
- EP-A- 0 225 607
- EP-A- 0 236 180
- GB-A- 2 225 689

## Beschreibung

### Funktelefonnetz

Die Erfindung geht von einem Funktelefonnetz nach dem Oberbegriff des Anspruchs 1 aus.

Es ist ein derartiges Funktelefonnetz bekannt (Funkschau, 1989, Heft 11, Seiten 22 bis 29), bei dem ein sich nicht in der Nähe seines Basisapparates aufhaltender Benutzer eines schnurlosen Telefons unter Umständen erst einen längeren Weg zurücklegen muß, bevor er zu seinem Basisapparat zurückkehrt oder in den Versorgungsbereich einer ortsfesten Funkstation gelangt und eine Funkverbindung mit dieser aufnehmen kann.

Bei dem bekannten Funktelefonnetz und bei ähnlichen Netzen (CT2, PCN usw.) arbeiten die mobilen Funkstationen nämlich nur mit geringen Sendeleistungen, so daß die Versorgungsbereiche in der Regel einen kleinen Radius von bis zu 200 m haben. In diesen Versorgungsbereichen kann es daher in Hauptverkehrszeiten zu gegenseitigen akustischen und hochfrequenzmäßigen Störungen der mobilen Funkstationen kommen.

Der Erfindung liegt die Aufgabe zugrunde, ein Funknetz gemäß dem Oberbegriff des Anspruchs 1 derart weiterzubilden, daß ein sich nicht an seinem Basisapparat oder nicht in einem Versorgungsbereich einer ortsfesten Funkstation aufhaltender Benutzer einer mobilen Funkstation die Möglichkeit erhält, mit der ortsfesten Funkstation in Verbindung zu treten, ohne daß es dazu eines hohen technischen Aufwandes bedarf.

Diese Aufgabe wird bei einem Funktelefonnetz nach dem Oberbegriff des Anspruchs 1 durch die in dem kennzeichnenden Teil dieses Anspruchs angegebenen Merkmale gelöst. Die mit der Erfindung erzielbaren Vorteile bestehen insbesondere darin, daß an verschiedenen Orten außerhalb der Versorgungsbereiche der ortsfesten Funkstationen Funkstellen mit verhältnismäßig geringem Aufwand installiert werden können, so daß sich die Zahl der Orte, an denen der Benutzer einer mobilen Funkstation in Funkverbindung mit einer ortsfesten Funkstation treten kann, beliebig erhöhen läßt.

Bevorzugte Anwendungsgebiete für das erfindungsgemäße Funktelefonnetz sind zum Beispiel die Netze CT2 und PCN.

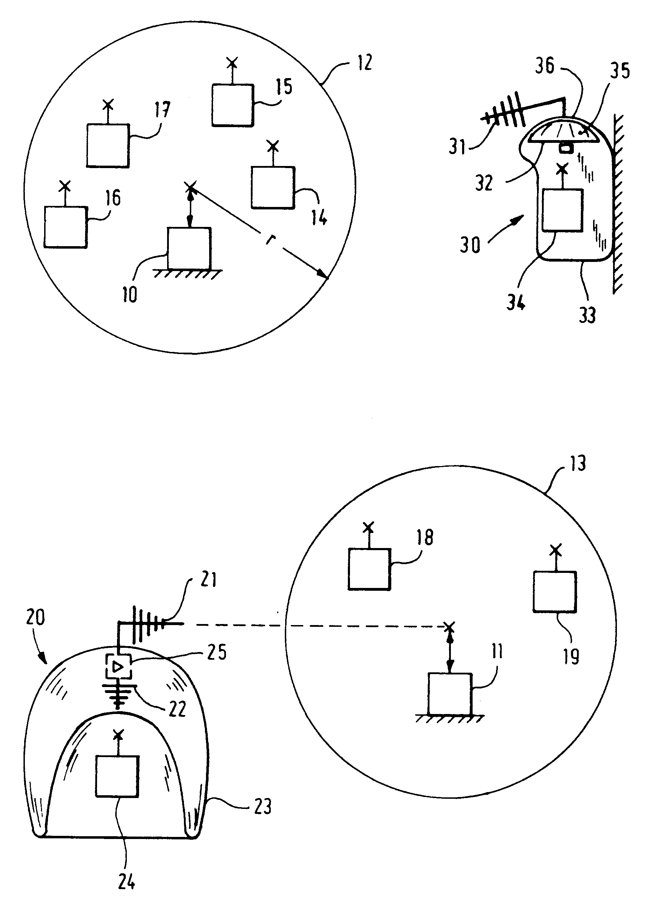

Ausführungsbeispiele der Erfindung sind in der Zeichnung anhand einer einzigen Figur dargestellt und werden im folgenden näher erläutert.

In der ein Blockschaltbild eines erfindungsgemäßen Funktelefonnetzes zeigenden Figur bezeichnen 10 und 11 zwei von mehreren ortsfesten Funkstationen, deren Versorgungsbereiche 12, 13 beispielsweise einen Radius r = 200 m haben. In den Versorgungsbereichen 12, 13 halten sich mehrere mobile Funkstationen auf, von denen in dem Versorgungsbereich 12 nur vier mobile Funkstationen 14 bis 17 und in dem Versorgungsbereich 13 nur zwei mobile Funkstationen 18 und 19 gezeigt sind. Eine erste Funkstelle 20, die außerhalb der Versorgungsbereiche 12 und 13 ortsfest angeordnet ist, weist zwei Antennen 21 und 22 auf, das sind vorzugsweise bündelnde Antennen, wie zum Beispiel Yagi-Antennen. Diese fußpunktseitig miteinander verbundenen Antennen sind vorzugsweise auf bzw. in einer ortsfesten Schallschutzhaube 23 derart befestigt, daß die erste Antenne 21 auf die empfangsgünstige zweite ortsfeste Funkstation 11 und die zweite Antenne 22 auf eine unter der Schallschutzhaube 23 befindliche, von einem Benutzer in der Hand gehaltene mobile Funkstation 24 ausgerichtet ist. Die Antennen 21 und 22 können über einen Hochfrequenzverstärker 25 miteinander verbunden sein.

Eine zweite ortsfeste Funkstelle 30, die sich ebenfalls außerhalb der Versorgungsbereiche 12 und 13 befindet, weist zwei ortsfeste Antennen 31 und 32 auf, von denen die erste Antenne 31 eine bündelnde, auf die empfangsgünstige ortsfeste Funkstation 10 ausgerichtete Antenne und die zweite Antenne 32 eine in einer Schallschutzhaube 33 untergebrachte und auf eine mobile Funkstation 34 ausgerichtete Parabolantenne ist. Die Parabolantenne kann, wie in der Zeichnung gezeigt, eine diskrete Parabolantenne sein, deren Fußpunkt mit dem Fußpunkt der ersten Antenne verbunden ist. Ihr Parabolspiegel 35 kann jedoch auch vorteilhafterweise Bestandteil des Daches 36 der Schallschutzhaube 33 sein. Beispielsweise kann der Parabolspiegel 35 durch Aufdampfen einer Metallschicht auf die Innenseite des entsprechend gewölbten Daches 36 hergestellt werden.

Die Funktion des vorstehend beschriebenen Funktelefonnetzes ist folgende.

Innerhalb eines Versorgungsbereiches 12, 13 werden die Funkverbindungen von den mobilen Funkstationen zu den ortsfesten Funkstationen 10 und 11 in der üblichen Weise hergestellt. Ein außerhalb eines Versorgungsbereiches sich aufhaltender Benutzer einer mobilen Funkstation, zum Beispiel 24, sucht die nächstliegende Funkstelle, zum Beispiel 20, auf und stellt sich mit seiner mobilen Funkstation 24 unter die Schallschutzhaube 23. Dann kann seine mobile Funkstation 24 über die zweite Antenne 22 und die erste Antenne 21, gegebenenfalls unter Zwischenschaltung des Verstärkers 25, mit der ortsfesten Funkstation 11 in Verbindung treten. In analoger Weise kannn sich ein außerhalb der Versorgungsbereiche 12, 13 befindlicher Benutzer einer mobilen Funkstation 34 zu der ihm am nächsten gelegenen zweiten Funkstelle 30 begeben und dort in Funkverbindung mit der ortsfesten Funkstation 10 treten. Die zweite Funkstelle 30 ist beispielsweise eine passive Funkstelle, das heißt eine Funkstelle ohne einen Hochfrequenzverstärker 25, wie in der ersten Funkstelle 20 gezeigt. Auch diese Funkstelle kann aber gegebenenfalls mit einem Hochfrequenzverstärker ausgerüstet sein. Bei einer aktiven Funkstelle muß auf eine ausreichende Entkopplung zwischen Sender und Empfänger der mobilen Funkstation geachtet werden.

In dem in der Figur gezeigten Funktelefonnetz sind die ortsfesten Funkstationen 10 und 11 und die mobilen Funkstationen 14 bis 19, 24 und 34 kombinierte Sende- und Empfangsgeräte. Das Funktelefonnetz läßt sich auch mit Vorteil anwenden, wenn die ortsfesten Funkstationen 10, 11 Sendegeräte und die mobilen Funkstationen 14 bis 19, 24 und 34 nur Empfangsgeräte sind.

## Patentansprüche

1. Funktelefonnetz mit ortsfesten Funkstationen (10, 11), deren räumlich begrenzte Versorgungsbereiche (12, 13) Abstände voneinander aufweisen, und mit mobilen Funkstationen (14-19), die innerhalb der Versorgungsbereiche betrieben werden können, **dadurch gekennzeichnet**, daß an beliebigen Orten außerhalb der Versorgungsbereiche (12, 13) für die mobilen Funkstationen Funkstellen (20, 30) mit je zwei mit ihren Fußpunkten verbundenen Antennen (21, 22; 31, 32) vorgesehen sind, von denen die erste Antenne (21; 31) auf eine empfangsgünstige ortsfeste Funkstation (11, 12) und die zweite Antenne (22, 32) auf eine sich an der jeweiligen Funkstelle (20, 30) aufhaltende mobile Funkstation (24, 34) ausgerichtet ist.

2. Funktelefonnetz nach Anspruch 1, dadurch gekennzeichnet, daß die erste Antenne (21) und die zweite Antenne (22) bündelnde Antennen sind.

3. Funktelefonnetz nach Anspruch 1 oder 2, dadurch gekennzeichnet, daß zwischen erster und zweiter Antenne (21, 22) ein Hochfrequenzverstärker (25) eingeschaltet ist.

4. Funktelefonnetz nach einem der Ansprüche 1 bis 3, dadurch gekennzeichnet, daß die erste und zweite Antenne (21, 22) an oder in einer den Benutzer einer mobilen Funkstation (24) gegen äußere Schallereignisse abschirmenden Vorrichtung (23) befestigt sind.

5. Funktelefonnetz nach Anspruch 4, dadurch gekennzeichnet, daß die Vorrichtung eine Schallschutzhaube (23) ist.

6. Funktelefonnetz nach Anspruch 3, dadurch gekennzeichnet, daß als zweite Antenne (32) eine Parabolantenne unter dem Dach (36) einer Schallschutzhaube (33) vorgesehen ist.

7. Funktelefonnetz nach Anspruch 6, dadurch gekennzeichnet, daß das gewölbte Dach (36) der Schallschutzhaube (33) als Parabolantenne (32) ausgebildet ist.

## Claims

1. Radio telephone network with stationary radio stations (10, 11), the spatially limited coverage areas (12, 13) of which are spaced apart, and having mobile radio stations (14, 19) which can be operated within the coverage areas, characterized in that, at arbitrary locations outside the coverage areas (12, 13) for the mobile radio stations, radio positions (20, 30) having in each case two antennas (21, 22; 31, 32) joined with their bases are provided, the first antenna (21; 31) of which is aligned with a stationary radio station (11, 12) with favourable reception and the second antenna (22, 32) of which is aligned with a mobile radio station (24, 34) which is located at the respective radio position (20, 30).

2. Radio telephone network according to Claim 1, characterized in that the first antenna (21) and the second antenna (22) are directional antennas.

3. Radio telephone network according to Claim 1 or 2, characterized in that a radio-frequency amplifier (25) is inserted between the first and second antenna (21, 22).

4. Radio telephone network according to one of Claims 1 to 3, characterized in that the first and second antenna (21, 22) are mounted on or in a device (23) shielding the user of a mobile radio station (24) against external sound events.

5. Radio telephone network according to Claim 4, characterized in that the device is a sound-proofing hood (23).

6. Radio telephone network according to Claim 3, characterized in that a parabolic antenna is provided as second antenna (32) under the roof (36) of a sound-proofing hood (33).

7. Radio telephone network according to Claim 6, characterized in that the domed roof (36) of the sound-proofing hood (33) is constructed as parabolic antenna (32).

## Revendications

1. Réseau de radiotéléphone avec des stations radio fixes (10, 11) dont les zones de couverture (12, 13) limitées dans l'espace présentent certaines distances les unes par rapport aux autres, et avec des stations radio mobiles (14 à 19), qui peuvent être utilisées à l'intérieur des zones de couverture, réseau de radiotéléphone, caractérisé en ce que l'on prévoit dans les endroits que l'on veut en dehors des zones de couverture (12, 13) des postes radio (20, 30) pour les stations radio mobiles avec chacune deux antennes reliées par leurs pieds (21, 22 ; 31, 32) dont la première antenne (21, 31) est orientée sur une station radio fixe (11, 12) la plus favorable à la réception et la seconde antenne (22, 32) sur une station radio mobile (24, 34) se trouvant sur le poste radio correspondant (20, 30).

2. Réseau de radiotéléphone selon la revendication 1, caractérisé en ce que la première antenne (21) et la seconde antenne (22) sont des antennes de concentration.

3. Réseau de radiotéléphone selon la revendication 1 ou 2, caractérisé en ce que l'on branche entre la première et la seconde antenne (21, 22) un amplificateur à haute fréquence (25).

4. Réseau de radiotéléphone selon l'une des revendications 1 à 3, caractérisé en ce que la première et la seconde antenne (21, 22) sont fixées sur ou dans un dispositif (23) protégeant l'utilisateur d'une station radio mobile (24) contre les bruits survenant à l'extérieur.

5. Réseau de radiotéléphone selon la revendication 4, caractérisé en ce que le dispositif est un capot de protection contre le bruit (23).

6. Réseau de radiotéléphone selon la revendication 3, caractérisé en ce que l'on prévoit comme deuxième antenne (32) une antenne parabolique sous le toit (36) d'un capot de protection contre le bruit (33).

7. Réseau de radiotéléphone selon la revendication 6, caractérisé en ce que le toit bombé (36) du capot de protection contre le bruit (33) est constitué comme une antenne parabolique (32).
